# FASCICULE DE BREVET EUROPEEN

(11) **EP 1 799 549 B1**
(45) Date de publication et mention de la délivrance du brevet: **16.04.2008**
(21) Numéro de dépôt: 05800241.1
(22) Date de dépôt: 23.09.2005
(51) Int. Cl.: B64D 27/14

(54) **EMPENNAGE VERTICAL POUR AÉRONEF ET AÉRONEF MUNI D'UN TEL EMPENNAGE**
SEITENLEITWERKEINHEIT FÜR FLUGZEUG UND DAMIT VERSEHENES FLUGZEUG
VERTICAL TAIL UNIT FOR AIRCRAFT AND AIRCRAFT EQUIPPED WITH SAME

(30) Priorité: 15.10.2004 FR 0452348
(43) Date de publication de la demande: 27.06.2007
(73) Titulaire: AIRBUS France, 31060 Toulouse (FR)
(72) Inventeur: GUERING, Bernard, F-31850 Montrabe (FR)
(74) Mandataire: Schmit, Christian Norbert Marie
(86) Numéro de dépôt international: PCT/FR2005/050770
(87) Numéro de publication internationale: WO 2006/042982

(56) Documents cités:
- EP-A- 1 046 577
- US-A- 3 666 211

## Description

L'invention concerne un empennage vertical pour aéronef. Plus précisément l'invention concerne un empennage vertical muni d'un moteur ainsi qu'un assemblage du moteur et de l'empennage. L'invention trouve des applications dans le domaine de l'aéronautique, notamment sur des aéronefs long courrier destinés à transporter un grand nombre de passagers.

Actuellement, il existe des aéronefs munis d'au moins trois moteurs. Au moins deux moteurs sont situés à l'endroit de l'intrados de la voilure de l'aéronef tandis qu'un moteur supplémentaire, appelé par la suite troisième moteur, est situé à l'endroit d'un empennage vertical dudit aéronef.

Un tel aéronef est connu de US-3666211, qui montre toutes les caratéristiques du préambule de la revendication indépendante 1.

Dans l'état de la technique, la présence de ce troisième moteur nécessite de réaliser un empennage vertical en deux parties. Plus précisément, une dérive dudit empennage vertical est formée en deux parties, séparées l'une de l'autre par un corps du moteur. Une partie basse de la dérive, solidaire du fuselage, porte le moteur. Une partie haute de la dérive, solidaire dudit moteur, est à l'inverse portée par lui. Ainsi une continuité d'un corps de l'empennage vertical n'est pas assurée, puisqu'elle est interrompue par la présence du moteur. A l'endroit du moteur, il est donc nécessaire de disposer des cadres, ou panneaux, permettant d'intégrer le moteur à un contour général de l'empennage vertical, et permettant de reprendre au moins partiellement des efforts auxquels l'ensemble moteur/empennage vertical est soumis.

Cependant, une telle solution est difficile à mettre en oeuvre. Par ailleurs, une rigidité de l'ensemble est moins importante que celle d'un empennage vertical monobloc, c'est-à-dire dont un corps est formé d'un seul tenant. De plus, l'assemblage du moteur et de l'empennage vertical selon l'état de la technique augmente de façon considérable un poids général dudit empennage vertical.

Dans l'invention, on cherche à réaliser un empennage vertical muni d'un moteur, dont une rigidité et un poids ne sont pas affectés par la présence dudit moteur. On cherche également à réaliser un empennage vertical, muni d'un moteur, dont un montage est aisé, et un démontage possible. Ainsi, l'empennage vertical peut être utilisé sur un aéronef nécessitant un moteur supplémentaire à l'endroit dudit empennage vertical, ou sur un aéronef ne nécessitant pas la présence de ce moteur supplémentaire sur l'empennage vertical.

Pour cela, l'invention propose d'utiliser un empennage vertical monobloc, c'est-à-dire qu'une continuité du corps de l'empennage n'est pas interrompue par la présence d'un corps traversant ledit empennage. Un bâti portant le moteur est monté autour de l'empennage vertical, c'est-à-dire que le bâti n'est pas une structure à part entière, mais utilise la structure de l'empennage. Le moteur est monté sur la dérive de l'empennage vertical par l'intermédiaire d'un bâti fixé sur la dérive. L'air nécessaire au fonctionnement du moteur traverse un volume interne du bâti pour arriver jusqu'au moteur. Un profil aérodynamique naturel de l'empennage vertical, plus précisément d'un bord d'attaque de l'empennage vertical, assure une alimentation correcte en air du moteur.

L'invention a donc pour objet un empennage vertical pour aéronef, comportant une dérive et une gouverne, ledit empennage vertical étant muni d'un moteurs s'étendant dans un plan contenant l'empennage vertical et
en porte-à-faux au delà de la dérive et solidarisé à ladite dérive au moyen d'un bâti, **caractérisé en ce que** deux canaux d'écoulement d'air sont ménagés de part et d'autre de la dérive, à l'intérieur du bâti, entre une peau interne du bâti et une paroi externe de ladite dérive.

Selon des exemples de réalisation particuliers de l'invention, l'empennage vertical selon l'invention peut également comporter tout ou partie des caractéristiques supplémentaires suivantes :
- Le bâti comporte une pluralité de demi-arceaux disposés de part et d'autre de la dérive, un rayon de courbure des demi-arceaux suivant un rayon de courbure d'un corps du moteur. Par pluralité, on entend plus de deux.
- Chaque demi-arceau est solidaire à l'endroit d'une extrémité basse et à l'endroit d'une extrémité haute d'une face de la dérive.
- Le bâti est muni d'une peau externe et d'une peau interne, les demi-arceaux étant disposés dans un volume interne ménagé entre les peaux externe et interne du bâti.
- Le moteur est solidaire d'une extrémité arrière du bâti.
- Le bâti comporte au moins un arceau, ledit arceau étant situé à l'endroit d'une extrémité avant et/ou de l'extrémité arrière du bâti.
- Un dispositif d'entrée d'air s'étend en porte-à-faux au delà de la dérive, ledit dispositif d'entrée d'air étant solidaire de l'extrémité avant du bâti.
- Le dispositif d'entrée d'air est monobloc et amovible.

L'invention a également pour objet un aéronef muni d'un tel empennage vertical.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : Une représentation générale d'un aéronef selon un exemple de réalisation de l'invention ;
- Figure 2 : Une représentation de côté d'un empennage vertical muni d'un moteur selon un exemple de réalisation de l'invention ;
- Figure 3 : Une représentation schématique d'un assemblage d'un moteur sur un empennage vertical selon un exemple de réalisation de l'invention ;
- Figure 4 : Une coupe transversale d'un empennage vertical de l'invention à l'endroit d'une liaison entre le moteur et ledit empennage vertical.

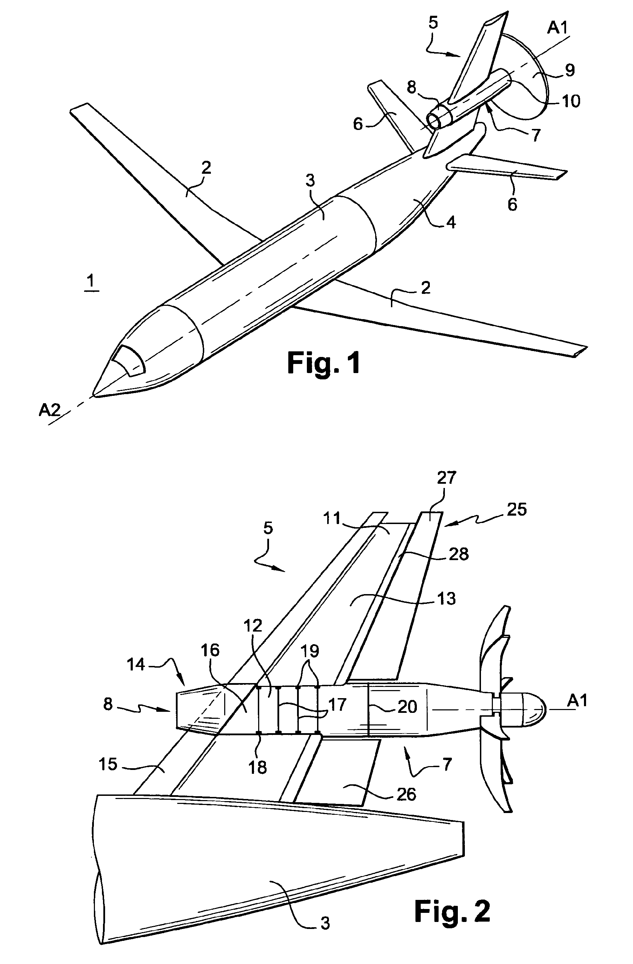

Sur la figure 1 est représenté de façon schématique un aéronef 1. Les moteurs portés par une voilure 2 dudit aéronef 1 non pas été représentés. A l'endroit d'une extrémité arrière 4 d'un fuselage 3 de l'aéronef 1 est situé un empennage vertical 5 ainsi qu'un empennage horizontal 6. L'empennage vertical 5 est muni d'un moteur 7. Un axe A1 du moteur est parallèle à un axe A2 de l'aéronef 1. L'air pénètre dans le moteur 7 par une entrée d'air 8. L'air traverse le moteur 7 jusqu'à une extrémité arrière 10 dudit moteur 7 portant une hélice 9. L'air s'échappant du moteur 7 à l'endroit de l'extrémité arrière 10 fait ainsi tourner l'hélice 9.

Un assemblage de l'empennage vertical 5 et du moteur 7 est représenté plus en détails sur la figure 2. Le moteur 7 est solidarisé à une dérive 11 de l'empennage vertical 5 par l'intermédiaire d'un bâti 12. Le bâti 12 est fixé sur un corps 13 de la dérive 11. Le moteur 7 est monté sur ledit bâti 12 de manière à s'étendre en porte-à-faux sur l'empennage vertical 5, dans un prolongement du corps 13 de la dérive 11. Un dispositif d'entrée d'air 14 est solidaire d'une extrémité avant 16 du bâti 12. Ledit dispositif d'entrée d'air 14 ménage une entrée d'air 8 à l'endroit d'un bord d'attaque 15 de l'empennage vertical 5. L'air traverse ainsi le dispositif d'entrée d'air 14, le bâti 12 et le moteur 7.

Par avant, on entend la partie, ou l'extrémité, dirigée vers un cockpit de l'aéronef. Par arrière, on entend la partie, ou l'extrémité la plus éloignée dudit cockpit.

Dans un exemple de réalisation particulier du bâti 12 de l'invention, ledit bâti 12 est muni d'une pluralité de demi-arceaux 17, chaque demi-arceau 17 étant solidaire d'une des deux faces de la dérive 11. Les demi-arceaux 17 forment des protubérances sur les faces de la dérive 11. Les demi-arceaux 17, disposés ainsi de part et d'autre de la dérive 11, forment une armature du bâti 12. La disposition des demi-arceaux 17 sur la dérive 11 est telle que le bâti 12 a une forme générale circulaire cylindrique. Un rayon de courbure des demi-arceaux 17 suit un rayon de courbure du corps du moteur 7 également de forme générale cylindrique. L'ensemble bâti 12 / moteur 7 a une forme générale en tube.

Une première extrémité 18 ou extrémité basse, des demi-arceaux 17 est solidarisée, par tout moyen, à une face, gauche ou droite, de la dérive 11, tandis qu'une extrémité haute 19 ou deuxième extrémité, dudit demi-arceau 17 est solidarisée à la même face de la dérive 11, à une hauteur supérieure. Par hauteur, on entend la dimension de la dérive 11 qui s'étend perpendiculairement à l'axe A1 du moteur 7 (figure 1). Les demi-arceaux 17 sont par exemple soudés sur les faces de la dérive 11. Il est également possible de solidarisé les demi-arceaux 17 à la dérive 11 au moyen de vis et d'écrous.

Le bâti 12 peut également comporter un ou des arceaux 20 disposés à des extrémités dudit bâti 12. Le bâti 12 n'est pas solidaire de la dérive 11 à l'endroit où le ou les arceaux 20 sont situés. La présence de ce ou de ces arceaux 20 permet d'augmenter une longueur du bâti 12. Par longueur du bâti 12, on entend la dimension du bâti s'étendant parallèlement à l'axe A1 du moteur 7. En augmentant la longueur du bâti 12 à l'endroit d'une extrémité arrière dudit bâti 12, on éloigne, par exemple, le moteur 7 de l'empennage vertical 5. Et augmenter la longueur du bâti 12 à l'endroit de l'extrémité avant 16 dudit bâti 12, permet de placer le dispositif d'entrée d'air 14 bien en avant par rapport à l'empennage vertical 5.

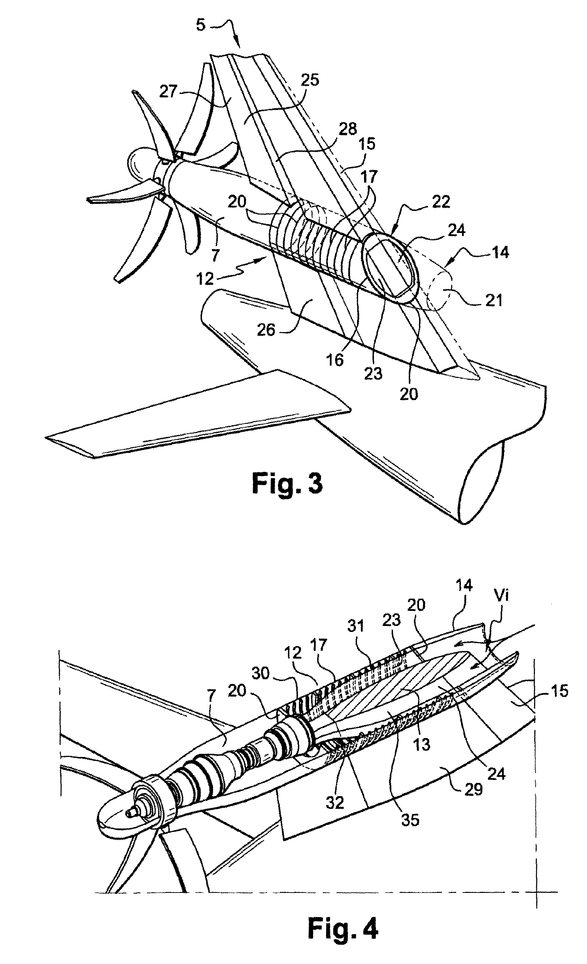

Sur la figure 3, on peut voir plus en détails le dispositif d'entrée d'air 14 et une trajectoire de l'air entrant dans le bâti 12 par le dispositif d'entrée d'air 14, pour transiter jusqu'au moteur 7. Deux canaux 23, 24, d'écoulement d'air sont ménagés à l'intérieur du bâti 12, chaque canal 23 et 24 longeant une face opposée de la dérive 11.

Le dispositif d'entrée d'air 14 a une forme générale circulaire cylindrique. Une extrémité avant 21 du dispositif d'entrée d'air 14 est débouchante vers l'extérieur, c'est-à-dire ouverte, de manière à autoriser une entrée d'air. Une extrémité arrière 22 du dispositif d'entrée d'air 14 est solidaire de l'extrémité avant 16 du bâti 12. Par exemple, l'extrémité arrière 22 du dispositif d'entrée d'air 14 est fixée à un arceau 20 du bâti 12.

Le dispositif d'entrée d'air 14 est un tube creux, l'air peut circuler depuis l'extrémité avant 21 jusqu'à l'extrémité arrière 22 du dispositif 14. La présence du bord d'attaque 15 de l'empennage vertical 5 dans un volume interne Vi du dispositif d'entrée d'air 14 oblige l'air transitant dans ledit dispositif 14 à se scinder, pour s'écouler à l'intérieur du bâti 12, par les canaux d'écoulement d'air 23 et 24.

Une gouverne 25 de l'empennage vertical 6 est formé de deux parties, respectivement partie basse 26 et partie haute 27, disposées de part et d'autre du bâti 12 et/ou du moteur 7. La gouverne 25 est montée mobile sur la dérive 11 par l'intermédiaire d'une partie intermédiaire 28, ladite partie intermédiaire 28 étant montée fixe le long de la dérive 11.

Sur la figure 4 est représenté en coupe transversale de l'ensemble moteur 7 / bâti 12 / dispositif d'entrée d'air 14. On peut également voir une partie inférieure 29 de l'empennage vertical 5.

Le bord d'attaque 15 de l'empennage vertical 5 traverse le dispositif d'entrée d'air 14. Le bâti 12 comporte une pluralité de demi-arceaux 17 disposés de part et d'autre du corps 13 de la dérive 11. Le bâti 12 comporte par ailleurs deux arceaux 20 disposés respectivement à l'endroit de l'extrémité avant 16 et à l'endroit de l'extrémité arrière dudit bâti 12.

Une peau externe 30 du bâti 12 encadre une face externe des demi-arceaux 17 et des arceaux 20. Une peau interne 31 du bâti 12 est située entre les demi-arceaux 17 et le corps 13 de la dérive 11. Ainsi les arceaux 20 et les demi-arceaux 17 sont contenus dans un volume interne 32 ménagé entre la peau externe 30 et la peau interne 31 du bâti 12. Sur la figure 4, on peut voir la trajectoire de l'air entrant dans le bâti 12.

Les deux canaux d'écoulement d'air 23 et 24 sont ménagés, dans une première partie de l'empennage vertical 5, entre une peau interne du capot 14 et la paroi externe de l'empennage vertical 5, et dans une deuxième partie de l'empennage vertical 5, entre la peau interne du bâti 12 et la paroi externe 35 de la dérive 11. L'air est ainsi canalisé depuis le dispositif d'entrée d'air 14 jusqu'à une turbine du moteur 7.

Dans un autre exemple de réalisation de l'invention, on peut prévoir que les demi-arceaux 17 ne sont pas solidarisés directement aux faces de la dérive 11. Ainsi, les demi-arceaux 17 destinés à être situés sur une même face de la dérive 11 peuvent être solidaires d'une barre commune, ladite barre commune étant elle fixée à la dérive 11.

Dans un exemple de réalisation de l'empennage vertical 5 de l'invention, le dispositif d'entrée d'air 14 peut être solidarisé de façon inamovible, c'est-à-dire irréversible, au bâti 12, par exemple par soudure. Le dispositif d'entrée d'air 14 peut alors être formé en deux parties, selon une même disposition par rapport à l'empennage vertical 5 que celle des demi-arceaux 17. En effet, le dispositif d'entrée d'air est traversé, dans sa longueur, par le bord d'attaque 15 de l'empennage vertical 5. Aussi, on peut prévoir de former le dispositif d'entrée d'air 14 de part et d'autre des faces dudit bord d'attaque 15. II est également possible d'utiliser un dispositif d'entrée d'air 14 monobloc. II est alors possible de ménager, sur la paroi du dispositif d'entrée d'air 14, un évidement apte à recevoir un profil du bord d'attaque 15.

Dans un autre exemple de réalisation, on peut prévoir que le dispositif d'entrée d'air 14, monobloc ou non, est monté amovible, sur l'extrémité avant 16 du bâti 12. Le dispositif d'entrée d'air 14 est alors solidarisé audit bâti 12 par tout moyen de maintien réversible. Les moyens de maintien réversibles sont par exemple des clips, des vis, ou autre.

## Revendications

1. Empennage vertical (5) pour aéronef (1), comportant une dérive (11) et une gouverne (25), ledit empennage vertical étant muni d'un moteur (7) s'étendant dans un plan contenant l'empennage vertical et
en porte-à-faux au delà de la dérive (11) et solidarisé à ladite dérive au moyen d'un bâti (12), **caractérisé en ce que** deux canaux d'écoulement d'air (23, 24) sont ménagés de part et d'autre de la dérive (11), à l'intérieur du bâti (12), entre une peau interne (31) du bâti (12) et une paroi externe de ladite dérive (11).

2. Empennage vertical selon la revendication 1, **caractérisé en ce que** le bâti (12) comporte une pluralité de demi-arceaux (17) disposés de part et d'autre de la dérive (11), un rayon de courbure des demi-arceaux suivant un rayon de courbure d'un corps du moteur (7).

3. Empennage vertical selon la revendication 2, **caractérisé en ce que** chaque demi-arceau (17) est solidaire à l'endroit d'une extrémité basse (18) et à l'endroit d'une extrémité haute (19) d'une face de la dérive (11).

4. Empennage vertical selon l'une des revendications 2 à 3, **caractérisé en ce que** le bâti (12) est muni d'une peau externe (30) et d'une peau interne (31), les demi-arceaux (17) étant disposés dans un volume interne ménagé entre les peaux externe et interne.

5. Empennage vertical selon la revendication 4, **caractérisé en ce que** le moteur (7) est solidaire d'une extrémité arrière du bâti.

6. Empennage vertical selon l'une des revendications 1 à 5, **caractérisé en ce que** le bâti (12) comporte au moins un arceau (20), ledit arceau étant situé à l'endroit d'une extrémité avant (16) et/ou de l'extrémité arrière du bati (12).

7. Empennage vertical selon l'une des revendications 1 à 6, **caractérisé en ce qu'**un dispositif d'entrée d'air (14) s'étend en porte-à-faux au delà de la dérive (11), ledit dispositif d'entrée d'air (14) étant solidaire de l'extrémité avant du bâti (12).

8. Empennage vertical selon la revendication 7, **caractérisé en ce que** le dispositif d'entrée d'air (14) est monobloc et amovible.

9. Aéronef (1) muni d'un empennage vertical (5) selon l'une des revendications 1 à 8.

## Claims

1. A vertical tail unit (5) for aircraft (1), comprising a fin (11) and a flight control surface (25), said vertical tail unit being equipped with an engine (7) extending in a plane containing the vertical tail unit and extending cantilevered beyond the fin (11) and integral with said fin by means of a mount (12), **characterized in that** two air flow channels (23, 24) are provided on both sides of the fin (11), inside the mount (12), between an inner skin (31) of the mount (12) and an outer wall of said fin (11).

2. The vertical tail unit according to claim 1, **characterized in that** the mount (12) comprises a plurality of half-hoops (17) disposed on both sides of the fin (11), a radius of curvature of the half-hoops following a radius of curvature of an engine body (7).

3. The vertical tail unit according to claim 2, **characterized in that** each half-hoop (17) is integral with the location of a bottom extremity (18) and with the location of a top extremity (19) of a face of the fin (11).

4. The vertical tail unit according to one of claims 2 to 3, **characterized in that** the mount (12) is equipped with an outer skin (30) and an inner skin (31), the half-hoops (17) being disposed in an inner volume provided between the outer and inner skins.

5. The vertical tail unit according to claim 4, **characterized in that** the engine (7) is integral with a rear extremity of the mount.

6. The vertical tail unit according to one of claims 1 to 5, **characterized in that** the mount (12) comprises at least one hoop (20), said hoop being situated at the location of a front extremity (16) and/or rear extremity of the mount (12).

7. The vertical tail unit according to one of claims 1 to 6, **characterized in that** an air intake device (14) extends cantilevered beyond the fin (11), said air intake device (14) being integral with the front extremity of the mount (12).

8. The vertical tail unit according to claim 7, **characterized in that** the air intake device (14) is one-piece and detachable.

9. An aircraft (1) equipped with a vertical tail unit (5) according to one of claims 1 to 8.

## Patentansprüche

1. - Seitenleitwerk (5) für ein Luftfahrzeug (1), mit einer Seitenflosse (11) und einem Ruder (25), wobei das besagte Seitenleitwerk mit einem Motor (7) bestückt ist, der sich über eine Ebene mit dem Seitenleitwerk erstreckt, über die Seitenflosse (11) hinaus überstehend und über ein Gehäuse (12) mit der besagten Seitenflosse verbunden ist, und **dadurch gekennzeichnet, dass** zwei Luftableitkanäle (23, 24) beiderseits der Seitenflosse (11), im Inneren des Gehäuses (12), zwischen der Innenhaut (31) des Gehäuses (12) und einer Außenwand der besagten Seitenflosse (11) angeordnet sind.

2. - Seitenleitwerk nach Anspruch 1, **dadurch gekennzeichnet, dass** das Gehäuse (12) eine Vielzahl an Halbbögen (17) enthält, die beiderseits der Seitenflosse (11) angeordnet sind, wobei ein Krümmungsradius der Halbbögen dem Krümmungsradius eines Motorgehäuses (7) entspricht.

3. - Seitenleitwerk nach Anspruch 2, **dadurch gekennzeichnet, dass** jeder Halbbogen (17) am unteren Ende (18) und am oberen Ende (19) einer Fläche der Seitenflosse (11) befestigt ist.

4. - Seitenleitwerk nach einem der Ansprüche 2 bis 3, **dadurch gekennzeichnet, dass** jeder Halbbogen (17) mit einer Außenhaut (30) und einer Innenhaut (31) versehen ist, wobei die Halbbögen (17) in einem Innenvolumen angeordnet sind, das von der Innen- und Außenhaut gebildet wird.

5. - Seitenleitwerk nach Anspruch 4, **dadurch gekennzeichnet, dass** der Motor (7) fest mit einem hinteren Ende des Gehäuses verbunden ist.

6. - Seitenleitwerk nach einem der Ansprüche 1 bis 5, **dadurch gekennzeichnet, dass** das Gehäuse (12) zumindest einen Kreisbogen (20) enthält, wobei der besagte Kreisbogen (20) an der Stelle eines vorderen Endes (16) und/ oder des hinteren Endes des Gehäuses (12) angeordnet ist.

7. - Seitenleitwerk nach einem der Ansprüche 1 bis 6, **dadurch gekennzeichnet, dass** sich eine Lufteinlassvorrichtung (14) über die Seitenflosse (11) hinweg überstehend erstreckt, wobei die besagte Lufteinlassvorrichtung (14) mit dem vorderen Ende des Gehäuses (12) verbunden ist.

8. - Seitenleitwerk nach Anspruch 7, **dadurch gekennzeichnet, dass** die Lufteinlassvorrichtung (14) im Einzelblock gefertigt, und abnehmbar ist.

9. - Luftfahrzeug (1) mit einem Seitenleitwerk (5) nach einem der Ansprüche 1 bis 8.
